# EUROPEAN PATENT SPECIFICATION

(11) **EP 1 752 860 B1**
(45) Date of publication and mention of the grant of the patent: **18.03.2015**
(21) Application number: 06016840.8
(22) Date of filing: 11.08.2006
(51) Int. Cl.: H04M 1/02, G06F 3/01, G06F 3/0488, H04M 1/23

(54) **Mobile terminal with touch screen providing haptic feedback and corresponding method**
Mobiles Endgerät mit berührungsempfindlichem Bildschirm mit haptischer Rückmeldung und entsprechendes Verfahren
Terminal mobile avec écran tactile à rétroaction haptique et procédé correspondant

(30) Priority: 12.08.2005 KR 20050074193; 13.09.2005 KR 20050085259
(43) Date of publication of application: 14.02.2007
(73) Proprietor: LG Electronics Inc., Seoul 150-721 (KR)
(72) Inventor: Cheon, Jee Young, Daegu-si (KR); Park, Yeon Woo, Seocho-gu Seoul (KR); Lee, Sang Hyuck, Seoul (KR)
(74) Representative: Katérle, Axel

(56) References cited:
- EP-A- 1 260 949
- EP-A2- 1 018 680
- DE-A1- 10 154 643
- US-A1- 2004 075 676

## Description

### BACKGROUND OF THE INVENTION

### Field of the Invention

The present invention relates to a terminal, and more particularly, to a mobile terminal having a touch screen.

### Discussion of the Related Art

With increasing development of information communication technologies, information and communication environments has been changing rapidly in recent times. Particularly, mobile communication terminals have been considered to be requisites for modern society, and have been widely used throughout the world. With the increasing demands of users due to the widespread use of the above-mentioned mobile communication terminals, not only a general voice call function, but also a variety of additional functions such as MP3 file player function and camera function have been added to the mobile communication terminals.

In recent years, there has been introduced a mobile communication terminal having a touch screen type display. When a user pushes push-button type mechanical key buttons of a conventional non-touch-screen type mobile communication terminal, the user can feel tactile sensation in which the key buttons have been slightly pushed inward, and therefore, the user of the terminal can easily recognize that the key buttons have been correctly pushed. However, the conventional touch screen type mobile communication terminal has problems in that, when the user of the terminal pushes the key buttons on the touch screen of the terminal, the user cannot feel tactile sensation in which the key buttons have been pushed, and therefore, the user of the terminal cannot easily recognize that the key buttons have been correctly pushed.

US 2004/075676 A1 and DE 101 54 643 A1 disclose touch screen-type input devices providing haptic feedback to a user touching a touch pad in the form of mechanical vibration. EP 1 517 224 A2 discloses a display device comprising a touch screen for the visual display of information and for the input of commands and an actuator for moving the touch screen in a direction essentially perpendicular to the touch screen.

### SUMMARY OF THE INVENTION

It is an object of the present invention to enable a user of a touch screen assembly to easily confirm, in the form of touch sensation, whether key buttons on a touch screen have been correctly pushed or not.

To achieve the above object, the present invention provides a touch screen assembly according to claim 1, a terminal according to claim 9, and a key input method according to claim 11. Preferred embodiments of the invention are given in the dependent sub-claims.

A touch screen assembly in accordance with the present invention includes a touch screen type display part for displaying input parts used for a user to input information, a vibrator for providing vibration to the display part when an input operation is carried out through the input parts, and a vibrator driving part for driving the vibrator, wherein the vibrator driving part provides a voltage square wave to the vibrator so as to instantaneously vibrate the display part.

In another aspect of the present invention, a terminal includes the above-described touch screen assembly according to the present invention.

In yet another aspect of the present invention, a key input method on a terminal having a touch screen, includes displaying input parts on a touch screen, sensing that a user has performed an input operation through the input parts, and, when the input operation is sensed, providing instantaneous vibration to the touch screen.

### BRIEF DESCRIPTION OF THE DRAWINGS

The accompanying drawings, which are included to provide a further understanding of the invention, illustrate embodiment(s) of the invention and together with the description serve to explain the principle of the invention. In the drawings:

FIG. 1 is a perspective view illustrating a mobile terminal according to a first embodiment ;

FIG. 2 is a sectional view taken along line I-I' of FIG. 1 ;

FIG. 3 is a perspective view illustrating a mobile terminal according to a second embodiment;

FIG. 4 is a schematic block diagram of the mobile terminal according to the second embodiment ;

FIG. 5 is a schematic block diagram illustrating a mobile terminal having a touch screen according to a third embodiment ;

FIG. 6 is a front view of the mobile terminal having the touch screen according to the third embodiment ;

FIGs . 7A and 7B are circuit diagrams schematically illustrating the construction of a vibrator of the mobile terminal according to the third embodiment ;

FIG. 8 is a front view illustrating a preferred position of a vibrator in a mobile terminal according to Embodiment 3-1 ;

FIGs. 9A and 9B are sectional views taken along line II-II' of FIG. 8;

FIG. 10 is a front view illustrating a preferred position of a vibrator in a mobile terminal according to Embodiment 3-2 ; and

FIGs. 11A and 11B are sectional views taken along line III-III' of FIG. 10.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

The present invention may be applied to various kinds of terminals, such as a game device, as well as mobile communication terminals, such as a personal digital assistant (PDA), a portable phone, and a smart phone. The following description of the present invention will be given on the assumption that the present invention is applied to the mobile terminal, specifically, the portable phone, for convenience of easy description.

Furthermore, the present invention may be applied to all kinds of mobile terminals having at least one touch screen type display part. For convenience of easy description, however, the following embodiments of the present invention will be described on the assumption that the mobile terminal according to the present invention includes two display parts, and at least one of the two display parts is a touch screen type display part.

Consequently, it should be noted that the scope of the present invention is not limited by the following embodiments.

First Embodiment

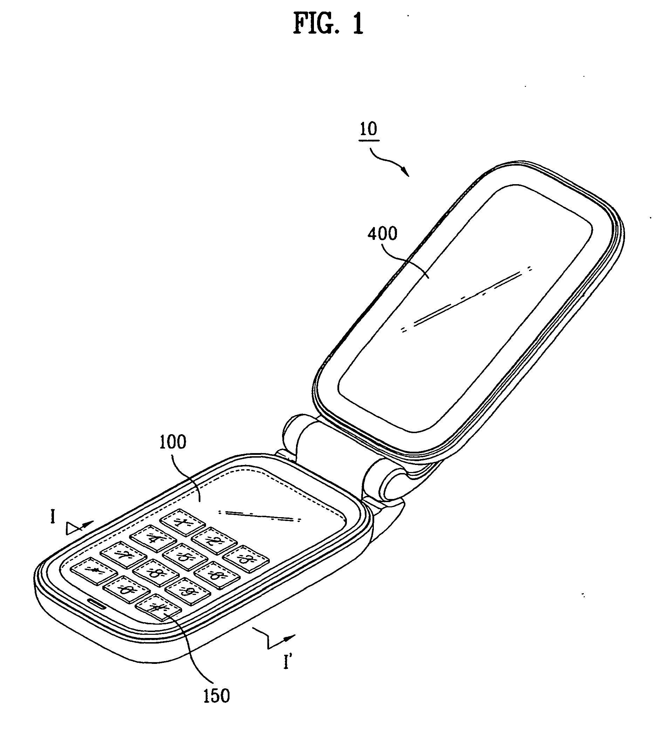

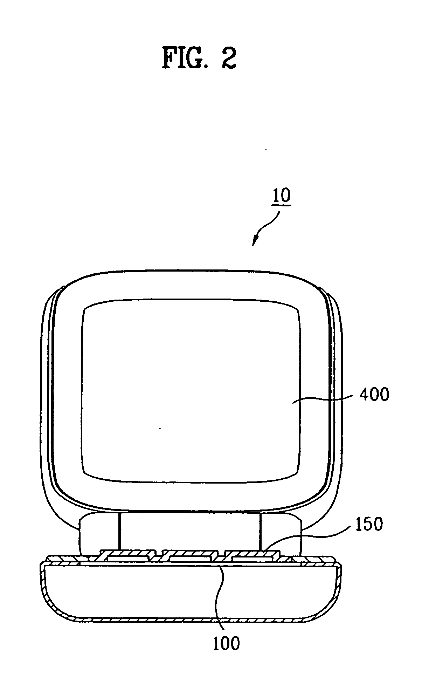

Hereinafter, a first embodiment will be described in detail with reference to FIGS. 1 and 2. FIG. 1 is a perspective view illustrating a mobile terminal according to a first embodiment , and FIG. 2 is a sectional view taken along line I-I' of FIG. 1.

As shown in FIG. 1, the mobile terminal according to the first embodiment preferably includes a first touch screen type display unit 100, a touch screen protection film part 150 formed at the front of the first display part 100, and a second display part 400, which is exclusively used as a display. The mobile terminal includes other components, such as a control part and a memory part, in addition to the above-mentioned components. However, the other components of the mobile terminal are not directly related to the present invention, and therefore, a description of the other components of the mobile terminal will not be given below for simplicity and clarity of description.

The first display part 100 is a touch screen that displays key buttons used to manipulate the mobile terminal. The second display part 400 displays information of the mobile terminal or motion pictures. The second display part 400 may be constructed with a touch screen like the touch screen of the first display part 100. The protection film part 150 is formed on the first display part 100. Preferably, the protection film part 150 is made of, but not limited to, a transparent material, such as transparent rubber, transparent silicon, or transparent plastic.

The formation of the protection film part 150 on the first display part 100 will be further described below with reference to FIG. 2.

FIG. 2 is a sectional view of a key button display section on the first display part 100 of the mobile terminal (taken along line I-I' of FIG. 1). As shown in FIG. 2, the protection film part 150 is formed into a shape corresponding to the key buttons on the first display part 100 such that, when a user of the terminal touches the key buttons, the user can feel specific tactile sensation. FIG. 2 illustrates the protection film part 150 having rectangular convex parts corresponding to the key buttons on the first display part 100. However, the shape or the construction of the protection film part is not limited to the shape or construction of the protection film part 150 of Figure 2. Further the shape and construction can be any shape or construction provided that the user can feel specific tactile sensation when the user of the terminal touches the key buttons.

With the above-described structure, the protection film part 150 can protect the surface of the touch screen and allow the user of the terminal to feel tactile sensation when the user preseses the key buttons, and thus, to allow confirmation of the key buttons.

Second Embodiment

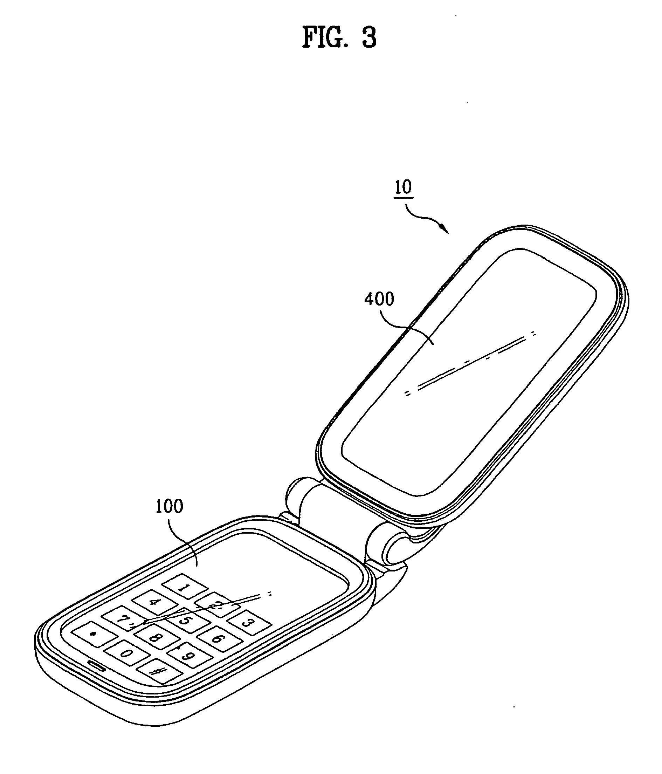

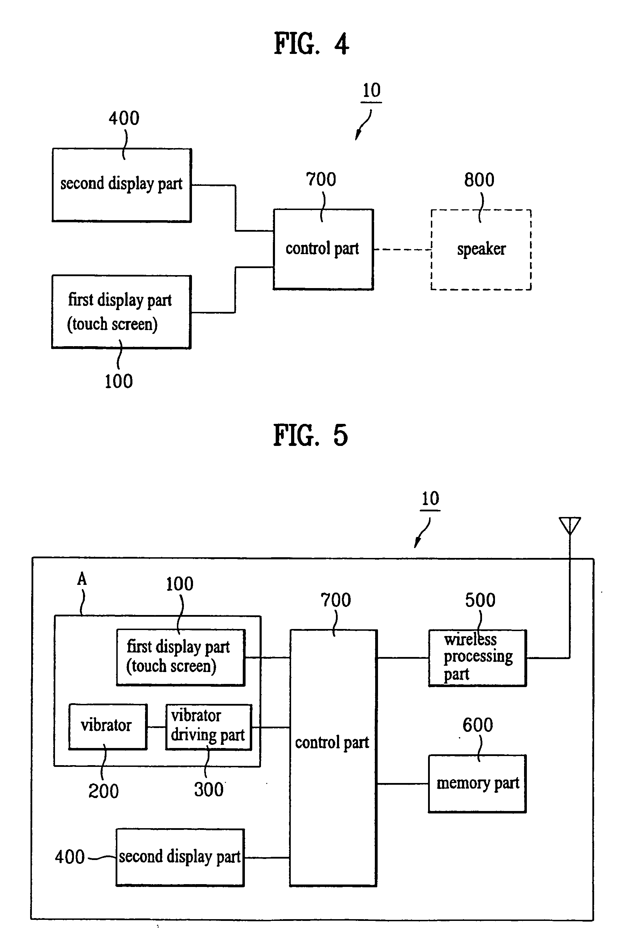

Hereinafter, a second embodiment will be described in detail with reference to FIGs. 3 and 4. FIG. 3 is a perspective view illustrating a mobile terminal 10 according to a second embodiment, and FIG. 4 is a schematic block diagram of the mobile terminal 10 according to the second embodiment .

As shown in FIGs. 3 and 4, the mobile terminal 10 according to the second embodiment preferably includes a first touch screen type display part 100, a second display part 400, and a control part 700. The mobile terminal 10 includes other components, such as a wireless transmitting and receiving part and a memory part, in addition to the above-mentioned components. However, the other components of the mobile terminal are not directly related to the present invention, and therefore, a description of the other components of the mobile terminal will not be given below for simplicity and clarity of description.

The first display part 100 is a touch screen that displays key buttons used to manipulate the mobile terminal. The second display part 400 displays information of the mobile terminal or motion pictures. The second display part 400 may be constructed with a touch screen like the touch screen of the first display part 100. The control part 700 controls the entire terminal.

When a user of the terminal touches one of the key buttons on the first display part 100, the control part 700 recognizes that one of the key buttons has been touched, and controls the first display unit 100 to temporarily change the shape of the touched key button for a predetermined period of time (e.g., 1 second) such that the user of the terminal can visually recognize that one of the key buttons has been correctly touched. For example, when the user of the terminal pushes one of the key buttons, for example, "1" key button, on the first display part 100, the control part 700 senses that the user of the terminal has touched the "1" key button, and controls the "1" key button such that the color of the "1" key button is changed or the shape of the "1" key button is enlarged or reversed. As a result, the user of the terminal can visually recognize that the "1" key button has been correctly touched.

In addition, the mobile terminal 10 may further include a speaker 800 as an option. In this case, the speaker 800 is constructed in a manner that when the user has correctly touched one of the key buttons on the touch screen, a predetermined sound can be outputted from the speaker 800 under the control of the control part 700. The predetermined sound may be a manufactured sound or a human voice. It is preferable that the sound outputted from the speaker is changed based on which key button is touched. Especially, in the case that the sound is a voice, it is preferable that, when the user of the terminal presses "1" key button or "2" key button, a voice corresponding to the "1" key button or the "2" key button (e.g., "one" or "two"), respectively, is outputted from the speaker. Further, it is possible that the control part 700 cannot determine which key button the user of the terminal has intended to touch because the user of the terminal simultaneously touches two or more buttons or touches the remaining area of the first display part 100 excluding the key button display section. In such a situation, it is preferable that an additional warning sound indicating input error is outputted from the speaker 800.

### Third Embodiment

Hereinafter, the construction of a mobile terminal according to a third embodiment will be described in detail with reference to FIG. 5. FIG. 5 is a schematic block diagram illustrating a mobile terminal 10 having a touch screen according to a third embodiment .

As shown in FIG. 5, the mobile terminal 10 according to the third embodiment includes a first display part 100, a vibrator 200, a vibrator driving part 300, a second display part 400, a wireless processing part 500, a memory part 600, and a control part 700. The mobile terminal 10 includes other components, such as a mobile broadcast receiving part, in addition to the above-mentioned components. However, the other components of the mobile terminal are not directly related to the present invention, and therefore, a description of the other components of the mobile terminal will not be given below for simplicity and clarity of description.

The first display part 100 is constructed in the form of a touch screen. The first display part 100 principally displays input parts used to manipulate the terminal, (e.g., key buttons) and allows a user of the terminal to press the key buttons through the touch screen in order to input information necessary to manipulate the terminal.

The vibrator 200 serves to provide vibration to the first display part 100. More specifically, when the user of the terminal has pressed the key buttons on the touch screen, the user can recognize that the key buttons have been touched and inputted. The vibrator driving part 300 serves to drive the vibrator 200. The vibration is transmitted to a finger of the user or a stylus pen through the first display part 100 such that the user can feel tactile sensation as if mechanical push buttons were slightly elastically pushed inward when the user of the terminal pushes the mechanical push buttons. Hereinafter, such tactile sensation will be referred to as "instantaneous vibration sensation," and vibration which the vibrator 200 generates for the user of the terminal to feel the instantaneous vibration sensation will be referred to as "instantaneous vibration." The instantaneous vibration sensation is most ideally realized when the vibrator 200 vibrates at a specific vibration frequency and/or a specific vibration magnitude, which will be described below in detail.

The first display part 100, the vibrator 200, and the vibrator driving part 300 may be mounted in the mobile communication terminal 10 in the form of a single touch screen assembly module.

The second display part 400 is an exclusive display part of the mobile communication terminal 10, which displays image and information necessary to use the terminal. The second display part 400 may be constructed with a touch screen like the touch screen of the first display part 100 to provide greater convenience in manipulation of the user of the terminal.

The memory part 600 serves to store various kinds of data necessary to operate the mobile terminal and data which the user of the terminal arbitrarily stores. The wireless processing part 500 serves to transmit and receive data in a wireless fashion such that the user of the terminal can perform mobile communication through a mobile communication network.

The control part 700 serves to control the entire terminal, including the first display part 100, the vibrator driving part 300, the second display part 400, the wireless processing part 500, and the memory part 600.

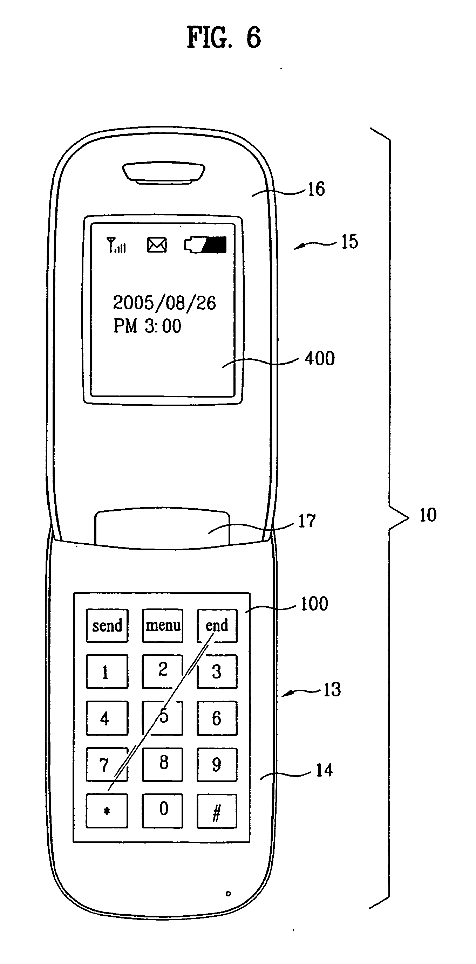

Hereinafter, the external structure of the mobile terminal 10 according to the third embodiment will be described. FIG. 6 is a front view of the mobile terminal having the touch screen according to the third embodiment.

As shown in FIG. 6, the mobile terminal 10 includes a first terminal body 13, which includes the first display part 100, a second terminal body 15, which includes the second display part 400, and a hinge part 17 for connecting the first terminal body 13 and the second terminal body 15 in a folder fashion. The first terminal body 13 and the second terminal body 15 includes a first housing 14 and a second housing 16, which define the external appearances of the first terminal body 13 and the second terminal body 15, respectively. The vibrator driving part 300, the wireless processing part 500, and the memory part 600 may be included in either the first terminal body 13 or the second terminal body 15. It is preferable, however, that the vibrator 200 is included in the first terminal body 13 including the first display part 100, which is a touch screen, which will be described below in detail.

With the above-stated construction of the mobile terminal, the vibrator 200 provides vibration in the terminal when the user of the terminal presses one of the key buttons on the touch screen. With the vibration, the user can recognize that the key button has been touched and the desired command has been inputted. A more detailed description is provided below.

It is possible for a user to inadvertently press or touch more than one key button at the same time. For example, the user may intend to press "5" key button but inadvertently presses "5" and "6" key buttons at the same time. In such a case, a feedback may be provided to notify that the user has incorrectly pressed or touched the key(s). Here, the feedback notification to the user can be in various forms, including no response (e.g., no vibration) or a warning sound.

1. Construction of Vibrator

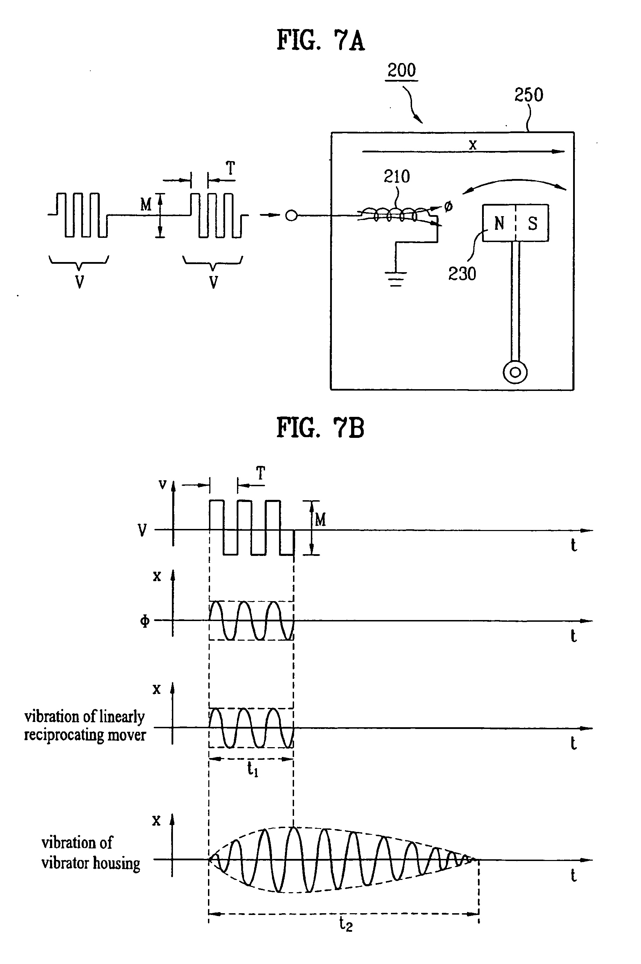

FIGs . 7A and 7B are circuit diagrams schematically illustrating the construction of the vibrator. As shown in FIG. 7A, the vibrator 200 includes a coil 210, a linearly reciprocating mover 230 having a permanent magnet disposed at a predetermined position thereof, and a vibrator housing 250.

When a user of the terminal touches one of the key buttons on the touch screen, the control part 700 recognizes that one of the key buttons has been touched, and transmits to the vibrator driving part 300 a specific signal indicating that one of the key buttons has been touched. Upon receipt, the vibrator driving part 300 generates a voltage square wave V corresponding to the specific signal.

When the voltage square wave V is inputted to the coil 210, a magnetic field of the coil 210 is changed based on the voltage square wave V. The change of the magnetic field of the coil 210 affects the permanent magnet of the linearly reciprocating mover 230. As a result, the linearly reciprocating mover 230 is linearly reciprocated in a direction indicated by x depending upon the change of the magnetic field of the coil 210, and therefore, the linearly reciprocating mover 230 impacts against the vibrator housing 250. Consequently, the vibrator 200 generates vibration corresponding to the inputted voltage square wave, i.e., vibration pulse in the direction of x.

This will be described in more detail with reference to FIG. 7B. The generation time of the magnetic field Φ of the coil 210 is equal to the application time of the voltage square wave V. Further, the moving time of the linearly reciprocating mover 230 is equal to the generation time of the magnetic field Φ of the coil 210. Consequently, the application time of the voltage square wave V, the generation time of the magnetic field Φ of the coil 210, and the moving time of the linearly reciprocating mover 230 are the same as indicated by t1 in FIG. 7B. Furthermore, the magnitude M of the voltage square wave V is constant. Therefore, the magnitude of the magnetic field of the coil 210 and the magnitude of the vibration of the linearly reciprocating mover 230 are constant during t1.

However, the vibration time t₂ of the vibrator housing 250 (see FIG. 7A) generated by the impact of the linearly reciprocating mover 230 against the vibrator housing 250 is approximately 10 times compared to the application time of the voltage square wave V due to the resonance of the vibrator housing 250. An experiment revealed that, when a voltage square wave having t₁ = 3 ms is inputted, the vibration time t₂ of the vibrator housing 250 is 30 ms. Moreover, the magnitude of the vibration of the vibrator housing 250 is gradually increased during t₁, and, after expiration of which gradually decreases. This means that the magnitude of the vibration pulse generated by the vibrator can be controlled by the number of cycle repetitions of the voltage square wave.

The vibration, pulse of the vibrator housing allows for the user of the terminal to feel instantaneous vibration sensation when the user of the terminal pushes one of the key buttons on the touch screen.

2. Position of Vibrator

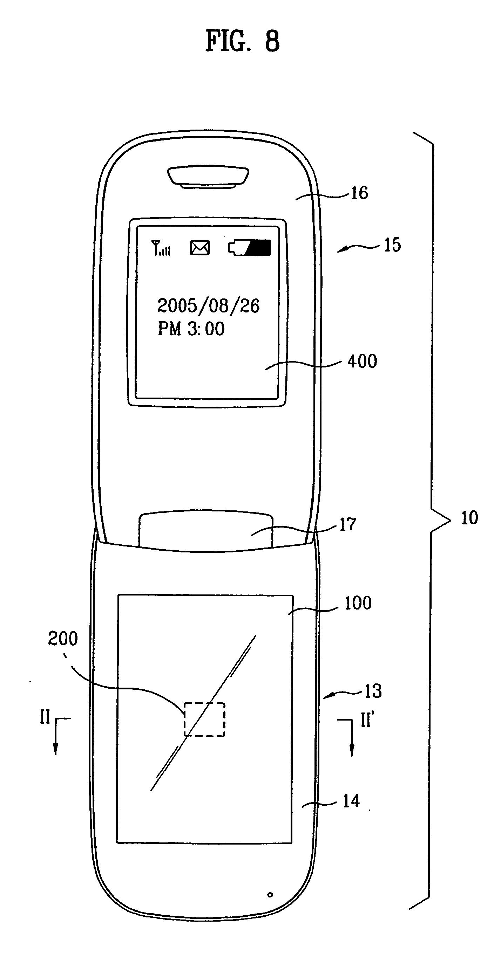

Hereinafter, preferable positions of a vibrator in a mobile terminal according to Embodiment 3-1 and Embodiment 3-2 will be described with reference to FIGs. 8 to 11.

Embodiment 3-1: Vibrator positioned at the center of the first display part

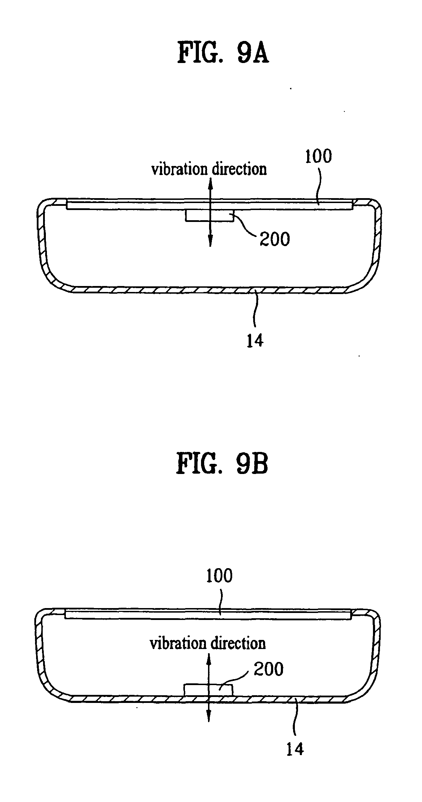

FIG. 8 is a front view illustrating a preferred position of a vibrator 200 in a mobile terminal according to Embodiment 3-1 , and FIGs. 9A and 9B are sectional views taken along line II-II' of FIG. 8.

As shown in FIGs. 8 and 9A, the vibrator 200 may be positioned at the center of the lower surface, i.e. backside, of the first display part. (Hereinafter, the surface of the first display part facing the interior of the housing, is referred to as a "lower surface" of the first display part). Preferably, the vibrator 200 is constructed such that the vibration direction of the vibrator 200 is perpendicular to the lower surface of the first display part.

When the vibrator 200 is positioned at the center of the first display part 100 as shown in FIG. 8, vibration is applied to the center of the first display part. With this, the vibration can be uniformly distributed on the first display part to provide the user of the terminal with more accurate feedback with respect to user input.

Further, when the vibrator is directly attached to the lower surface of the first display part 100 as shown in FIG. 9A, vibration can be directly transmitted to a stylus pen or a finger of the user of the terminal through the first display part. With this, the vibration can be transmitted more accurately to the user of the terminal.

Although the vibrator 200 is directly attached to the lower surface of the first display part 100 as described above, the vibrator may be constructed such that the vibrator is attached to the inside of the first housing of the first terminal body while being spaced apart from the first display part 100, as shown in FIG. 9B. In this case, the vibrator 200 does not directly apply vibration to the first display part 100, but applies vibration to the stylus pen or the finger of the user of the terminal through the first housing 14. Consequently, a possibility of the first display part 100 being damaged due to the vibration is reduced.

Embodiment 3-2: Vibrator positioned at the edge of the first display part

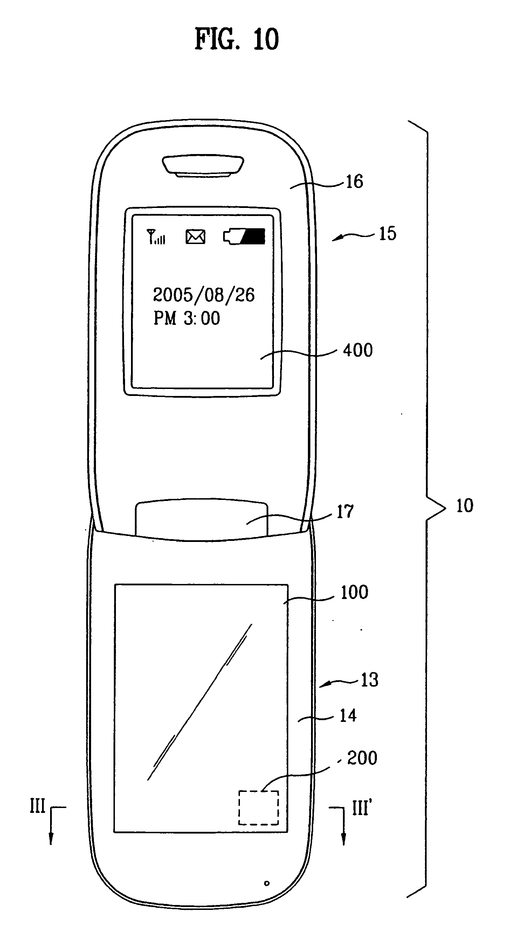

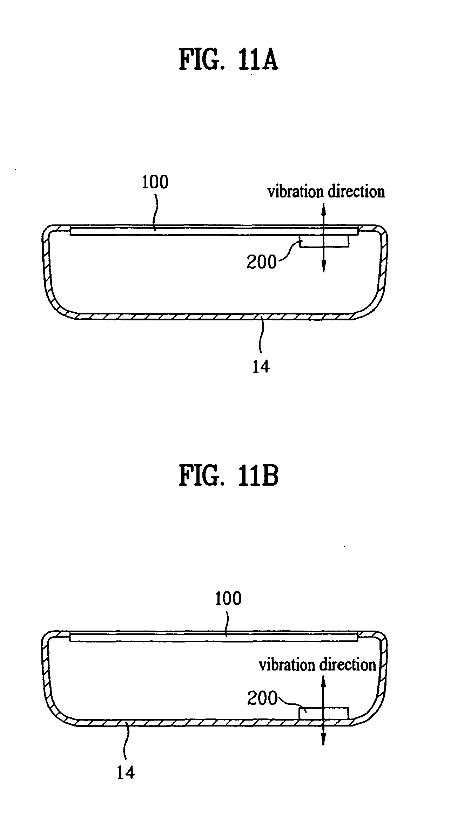

FIG. 10 is a front view illustrating a preferred position of a vibrator 200 in a mobile terminal according to Embodiment 3-2, and FIGs. 11A and 11B are sectional views taken along line III-III' of FIG. 10.

As shown in FIGs. 10 and 11A, the vibrator 200 may be positioned at the edge of the lower surface of the first display part. Preferably, the vibrator 200 is constructed such that the vibration direction of the vibrator 200 is perpendicular to the lower surface of the first display part like the previously described Embodiment 3-2.

When the vibrator 200 is positioned at the edge of the lower surface of the first display part 100 as shown in FIG. 10, the vibration of the vibrator 200 vibrates a portion of the edge of the first display part, and the vibration is propagated along the lower surface of the first display part 100. Consequently, an advantage of this embodiment is that the lower surface of the first display part can be vibrated even by vibration having a magnitude less than the case of FIG. 8.

In addition, referring to Embodiment 3-2, the vibrator 200 may be directly attached to the lower surface of the first display part 100 as shown in FIG. 11A. Alternatively, the vibrator 200 may be attached to the inside of the first housing as shown in FIG. 11B. The attachment of the vibrator 200 has been previously described in detail in connection with Embodiment 3-1, and therefore, a detailed description thereof will not be given below.

3. Voltage Square wave applied to Vibrator by Vibrator Driving Part

Hereinafter, the voltage square wave V, which is applied to the vibrator 200 by the vibrator driving part 300 such that a user of the terminal can feel instantaneous vibration sensation whenever the user of the terminal touches one of the key buttons on the touch screen, will be described in more detail with reference to FIG. 7.

The inventors have performed experiments on several subjects. The objective of the experiments were to determine whether the subjects were able to experience and/or feel the same or similar vibration provided to to the first display part 100 by the vibrator 200 to that of the the conventional push-type buttons (e.g., tactile sensation corresponding to feel of the key buttons pressed downward/inward) while varying the frequency and the number of cycle repetitions of the voltage square wave V.

Before discussing the results of the experiment, terms used to describe the results of the experiment are briefly defined as follows:

A term "voltage square wave V" refers to a voltage waveform generated by the vibrator driving part when a user of the terminal touches the touch screen once. Preferably, the voltage waveform is formed in the shape of a square wave. However, the voltage waveform is not limited to the shape of a square wave but may also be formed in other shapes, such as a sawtooth wave, a pulse wave, or a sine wave.

A term "number of cycle repetitions of voltage square wave" refers to a number of repetitions of one cycle T of the voltage square wave V. For example, the number of cycle repetitions of the voltage square wave V shown in FIG. 7B is 3.

A term "frequency f of voltage square wave" refers to a reciprocal of time corresponding to one cycle T of the voltage square wave V.

A term "magnitude M of voltage square wave" refers to a peak-to-peak amplitude of the voltage square wave V.

Referring to the experiment, the results of the experiment revealed that the magnitude of instantaneous vibration which a user of the terminal feels on the first display part is mainly influenced by the magnitude of the voltage square wave. Here, the magnitude of instantaneous vibration is partially influenced by the number of cycle repetitions of voltage square wave and the frequency of voltage square wave. This is because resonance may be generated between the voltage square wave and natural vibration frequency based on the material of the first display part and the material of the housing surrounding the first display part.

The experiment was carried out using a terminal having a vibrator provided to a touch screen, which is made of glass and surrounded by a housing made of polycarbonate, according to the present invention.

The experiments have revealed that it is preferable to have the following results. When the voltage square wave generated by the vibrator driving part has a number of cycle repetitions equaling 9 or less and a frequency of 300 Hz to 700 Hz, the subjects experienced instantaneous vibration sensation similar to tactile sensation obtained when the push type button(s) is actually pushed (e.g., conventional push-type buttons). Further, when the voltage square wave generated by the vibrator driving part preferably has a number of cycle repetitions equaling 5 or less and a frequency of 400 Hz to 600 Hz, the subjects experienced instantaneous vibration sensation further similar to tactile sensation obtained when one of the push type buttons is actually pushed. The results of the experiment are results obtained from actual experience of several subjects. Consequently, it should be noted that the results of the experiment are difficult to be calculated as accurate numerical data.

On the other hand, the vibrator 200 may be constructed to provide voltage square wave, associated with a first key button, having at least one of the number of cycle repetitions, the frequency, and the magnitude different from the number of cycle repetitions, frequency, and magnitude of the voltage square wave associated with a second key button. For example, if the user touches "5" key button which has a number of cycle repetitions equaling 3, and thereafter, the user touches "9" key button whose number of cycle repetitions equals 2, then the number of cycle repetitions associated with the selected key buttons are different. The same comparison can be made for the frequency and the magnitude. Furthermore, when the user of the terminal pushes the key buttons, the user of the terminal can perceive different instantaneous vibration sensations based on different voltage square waves without watching the second display part, whereby the user of the terminal can confirm which buttons have been pushed.

Such a construction may be easily used especially for visually impaired users. When the control part cannot determine which button the user of the terminal has intended to touch because the user of the terminal has simultaneously touched two or more buttons or touched the remaining area of the first display part excluding the key button display section, the vibrator may be constructed such that additional instantaneous vibration sensation indicating input error can be outputted from the vibrator. Alternatively, no response or no feedback can be provided to indicate error in pressing or touching the key buttons.

As apparent from the above description, the mobile terminal having the touch screen according to the previous embodiments has the following effects.

When a user of the terminal correctly touches the key buttons on the touch screen of the terminal, the user of the terminal can perceive, in the form of visual sensation, hearing sensation, and/or vibration sensation, that the key buttons have been correctly touched, and therefore, it is possible to more easily and conveniently manipulate the key buttons on the terminal having the touch screen. Especially, when the user of the terminal touches the key buttons on the touch screen of the terminal, the user can perceive, in the form of vibration sensation, that the key buttons have been correctly touched, and therefore, it is possible for the user of the terminal to confirm whether the key buttons have been touched without watching an additional display part.

Furthermore, when the user of the terminal pushes key buttons on the touch screen of the terminal, the user can feel or experience instantaneous vibration sensation similar to tactile sensation obtained when the conventional mechanical push buttons are actually pushed. Consequently, it is possible for any user experienced in using the conventional push-type mechanical buttons to easily manipulate the key buttons on the touch screen.

## Claims

1. A touch screen assembly comprising:
a touch screen type display part (100) for displaying input parts used for inputting information;
a vibrator (200) for providing vibration to the display part when an input operation is carried out through the input parts; and
a vibrator driving part (300) for driving the vibrator, wherein the vibrator driving part provides a voltage square wave to the vibrator to instantaneously vibrate the display part, **characterized in that** the voltage square wave has a number of cycle repetitions of 5 or less which have the same magnitude, and has a frequency of 300 Hz to 700 Hz.

2. The touch screen assembly according to claim 1, wherein the vibrator (200) includes:
a coil (210);
a linearly reciprocating mover (230) constructed to be linearly reciprocated depending upon the change of a magnetic field generated from the coil; and
a vibrator housing (250) constructed to surround the coil and the linearly reciprocating mover, and wherein
when the voltage square wave is applied to the coil, the linearly reciprocating mover impacts against the vibrator housing to generate vibration pulse, whereby vibration is provided to the display part (100).

3. The touch screen assembly according to claim 1 or 2, wherein the vibrator (200) is positioned at a backside of the display part.

4. The touch screen assembly according to claim 3, wherein the vibrator (200) is positioned at the edge of the backside.

5. The touch screen assembly according to claim 3, wherein the vibrator (200) is positioned at the center of the backside.

6. The touch screen assembly according to any one of claims 2-5, wherein the vibration pulse is applied perpendicularly to the plane of the display part.

7. The touch screen assembly according to any one of claims 2-6, wherein the magnitude of the vibration pulse is controlled by the number of cycle repetitions of the voltage square wave.

8. The touch screen assembly according to any one of claims 1-7, wherein the voltage square wave is constructed such that at least one of the number of cycle repetitions, the frequency, and the magnitude of the voltage square wave is different depending upon kinds of key buttons pushed by a user.

9. A terminal comprising:
a touch screen assembly including a touch screen type display part (100) for displaying input parts used for a user to input information, a vibrator (200) for providing vibration to the display part when information is inputted through the input parts, and a vibrator driving part (300) for driving the vibrator, the vibrator driving part providing a voltage square wave to the vibrator so as to instantaneously vibrate the display part; and
a housing (14) forming the external appearance of the terminal;
**characterized in that** the voltage square has a number of cycle repetitions of 5 or less which have the same magnitude, and has a frequency of 300 Hz to 700 Hz.

10. The terminal according to claim 9, wherein the vibrator (200) is positioned such that the vibrator is in contact with the inside of the housing (14) while the vibrator is spaced apart from a backside of the display part (100).

11. A key input method on a terminal having a touch screen, comprising:
a) displaying input parts on a touch screen;
b) recognizing that a user has performed an input operation through the input parts; and
c) when the input operation is sensed, inputting a voltage square wave corresponding to the input operation to a vibrator to cause the touch screen instantaneously vibrating;
**characterized in that** the voltage square wave has a number of cycle repetitions of 5 or less which have the same magnitude, and has a frequency of 300 Hz to 700 Hz.

12. The key input method according to claim 11, wherein the voltage square wave is constructed such that at least one of the number of cycle repetitions, the frequency, and the magnitude of the voltage square wave is different depending upon kinds of input parts manipulated by the user of the terminal.

## Patentansprüche

1. Berührungsbildschirmanordnung mit:
- einem Berührungsbildschirm-Anzeigeelement (100) zum Anzeigen von Eingabeelementen, die zur Eingabe von Informationen verwendet werden,
- einem Schwingungserzeuger (200) zum Zuführen von Schwingungen zum Anzeigeelement, wenn über die Eingabeelemente ein Eingabevorgang durchgeführt wird, und
- einem Schwingungserzeugerantriebselement (300) zum Antreiben des Schwingungserzeugers, wobei das Schwingungserzeugerantriebselement dem Schwingungserzeuger eine Spannungsrechteckwelle zuführt, um das Anzeigeelement unverzüglich in Schwingung zu versetzen, **dadurch gekennzeichnet, dass** die Spannungsrechteckwelle eine Anzahl Zykluswiederholungen von 5 oder weniger, welche die gleiche Größe haben, und eine Frequenz von 300 Hz bis 700 Hz hat.

2. Berührungsbildschirmanordnung nach Anspruch 1, wobei der Schwingungserzeuger (200) umfasst:
- eine Spule (210),
- eine linear hin- und hergehende Bewegungseinrichtung (230), die dazu ausgeführt ist, sich in Abhängigkeit von der Änderung eines durch die Spule erzeugten Magnetfelds linear hin- und herzubewegen, und
- ein Schwingungserzeugergehäuse (250), das dazu ausgeführt ist, die Spule und die linear hin- und hergehende Bewegungseinrichtung zu umschließen, und wobei,
- wenn die Spannungsrechteckwelle an die Spule angelegt wird, die linear hin- und hergehende Bewegungseinrichtung gegen das Schwingungserzeugergehäuse schlägt, um einen Schwingungsimpuls zu erzeugen, wodurch dem Anzeigeelement (100) Schwingungen zugeführt werden.

3. Berührungsbildschirmanordnung nach Anspruch 1 oder 2, wobei der Schwingungserzeuger (200) auf einer Rückseite des Anzeigeelements angeordnet ist.

4. Berührungsbildschirmanordnung nach Anspruch 3, wobei der Schwingungserzeuger (200) am Rand der Rückseite angeordnet ist.

5. Berührungsbildschirmanordnung nach Anspruch 3, wobei der Schwingungserzeuger (200) in der Mitte der Rückseite angeordnet ist.

6. Berührungsbildschirmanordnung nach einem der Ansprüche 2-5, wobei der Schwingungsimpuls senkrecht zur Ebene des Anzeigeelements angelegt wird.

7. Berührungsbildschirmanordnung nach einem der Ansprüche 2-6, wobei die Größe des Schwingungsimpulses durch die Anzahl der Zykluswiederholungen der Spannungsrechteckwelle gesteuert wird.

8. Berührungsbildschirmanordnung nach einem der Ansprüche 1-7, wobei die Spannungsrechteckwelle so ausgeführt ist, dass sich die Anzahl Zykluswiederholungen, die Frequenz und/oder die Größe der Spannungsrechteckwelle abhängig von der Art der von einem Benutzer gedrückten Tasten voneinander unterscheiden.

9. Endgerät mit:
- einer Berührungsbildschirmanordnung, die ein Berührungsbildschirm-Anzeigeelement (100) zum Anzeigen von Eingabeelementen, die von einem Benutzer zur Eingabe von Informationen verwendet werden, einen Schwingungserzeuger (200) zum Zuführen von Schwingungen zum Anzeigeelement, wenn über die Eingabeelemente Informationen eingegeben werden, und ein Schwingungserzeugerantriebselement (300) zum Antreiben des Schwingungserzeugers umfasst, wobei das Schwingungserzeugerantriebselement dem Schwingungserzeuger eine Spannungsrechteckwelle zuführt, um das Anzeigeelement unverzüglich in Schwingung zu versetzen, und
- einem Gehäuse (14), das das äußere Erscheinungsbild des Endgeräts gestaltet,
- **dadurch gekennzeichnet, dass** das Spannungsrechteck eine Anzahl Zykluswiederholungen von 5 oder weniger, welche die gleiche Größe haben, und eine Frequenz von 300 Hz bis 700 Hz hat.

10. Endgerät nach Anspruch 9, wobei der Schwingungserzeuger (200) so angeordnet ist, das der Schwingungserzeuger mit der Innenseite des Gehäuses (14) in Kontakt steht, wobei der Vibrator unter Abstand von einer Rückseite des Anzeigeelements (100) angeordnet ist.

11. Tasteneingabeverfahren an einem Endgerät mit einem Berührungsbildschirm, das umfasst:
a) Anzeigen von Eingabeelementen auf einem Berührungsbildschirm,
b) Erkennen, dass ein Benutzer über die Eingabeelemente einen Eingabevorgang durchgeführt hat, und
c) wenn der Eingabevorgang erfasst wird, Zuführen einer dem Eingabevorgang entsprechenden Spannungsrechteckwelle zu einem Schwingungserzeuger, um zu bewirken, dass der Berührungsbildschirm unverzüglich in Schwingung versetzt wird,
- **dadurch gekennzeichnet, dass** die Spannungsrechteckwelle eine Anzahl Zykluswiederholungen von 5 oder weniger, welche die gleiche Größe haben, und eine Frequenz von 300 Hz bis 700 Hz hat.

12. Tasteneingabeverfahren nach Anspruch 11, wobei die Spannungsrechteckwelle so ausgeführt ist, dass sich die Anzahl Zykluswiederholungen, die Frequenz und/oder die Größe der Spannungsrechteckwelle abhängig von der Art der vom Benutzer des Endgeräts betätigten Eingabeelemente voneinander unterscheiden.

## Revendications

1. Ensemble d'écran tactile comprenant :
une partie d'affichage (100) de type écran tactile destinée à afficher des parties d'entrée utilisées pour délivrer en entrée des informations ;
un vibreur (200) destiné à fournir une vibration à la partie d'affichage lorsqu'une opération d'entrée est réalisée par l'intermédiaire des parties d'entrée ; et
une partie de pilotage (300) de vibreur destinée à piloter le vibreur, dans lequel la partie de pilotage de vibreur délivre une onde carrée de tension au vibreur pour faire vibrer instantanément la partie d'affichage, **caractérisé en ce que** l'onde carrée de tension présente un nombre de répétitions de cycles de 5 ou moins qui présentent la même amplitude, et présente une fréquence de 300 Hz à 700 Hz.

2. Ensemble d'écran tactile selon la revendication 1, dans lequel le vibreur (200) comprend :
une bobine (210) ;
un dispositif de mouvement de va-et-vient linéaire (230) construit pour être déplacé linéairement en va-et-vient en fonction de la charge d'un champ magnétique généré à partir de la bobine ; et
un logement (250) de vibreur construit pour entourer la bobine et le dispositif de mouvement de va-et-vient, et dans lequel
lorsque l'onde carrée de tension est appliquée à la bobine, le dispositif de mouvement de va-et-vient linéaire se heurte contre le logement de vibreur pour générer une impulsion de vibration, d'où il résulte qu'une vibration est délivrée à la partie d'affichage (100).

3. Ensemble d'écran tactile selon la revendication 1 ou 2, dans lequel le vibreur (200) est positionné au niveau d'un côté arrière de la partie d'affichage.

4. Ensemble d'écran tactile selon la revendication 3, dans lequel le vibreur (200) est positionné au niveau du bord du côté arrière.

5. Ensemble d'écran tactile selon la revendication 3, dans lequel le vibreur (200) est positionné au niveau du centre du côté arrière.

6. Ensemble d'écran tactile selon l'une quelconque des revendications 2 à 5, dans lequel l'impulsion de vibration est appliquée perpendiculairement au plan de la partie d'affichage.

7. Ensemble d'écran tactile selon l'une quelconque des revendications 2 à 6, dans lequel l'amplitude de l'impulsion de vibration est commandée par le nombre de répétitions de cycles de l'onde carrée de tension.

8. Ensemble d'écran tactile selon l'une quelconque des revendications 1 à 7, dans lequel l'onde carrée de tension est construite d'une manière telle qu'au moins l'un parmi le nombre de répétitions de cycles, la fréquence et l'amplitude de l'onde carrée de tension est différent en fonction des types de touches pressées par un utilisateur.

9. Terminal comprenant :
un ensemble d'écran tactile comprenant une partie d'affichage (100) de type écran tactile destinée à afficher des parties d'entrée utilisées pour qu'un utilisateur délivre des informations en entrée, un vibreur (200) destiné à délivrer une vibration à la partie d'affichage lorsque des informations sont délivrées en entrée par l'intermédiaire des parties d'entrée, et une partie (300) de pilotage de vibreur destinée à piloter le vibreur, la partie de pilotage de vibreur délivrant une onde carrée de tension au vibreur de façon à faire instantanément vibrer la partie d'affichage ; et
un logement (14) formant l'apparence externe du terminal ;
**caractérisé en ce que** l'onde carrée de tension présente un nombre de répétitions de cycles de 5 ou moins qui présentent la même amplitude, et présente une fréquence de 300 Hz à 700 Hz.

10. Terminal selon la revendication 9, dans lequel le vibreur (200) est positionné d'une manière telle que le vibreur est en contact avec l'intérieur du logement (14) alors que le vibreur est espacé d'un côté arrière de la partie d'affichage (100).

11. Procédé d'entrée de touches sur un terminal comportant un écran tactile, comprenant les étapes consistant à :
a) afficher des parties d'entrée sur un écran tactile ;
b) reconnaître qu'un utilisateur a réalisé une opération d'entrée par l'intermédiaire des parties d'entrée ; et
c) lorsque l'opération d'entrée est détectée, délivrer en entrée une onde carrée de tension correspondant à l'opération d'entrée vers un vibreur pour amener l'écran tactile à vibrer instantanément ;
**caractérisé en ce que** l'onde carrée de tension présente un nombre de répétitions de cycles de 5 ou moins qui présentent la même amplitude, et présente une fréquence de 300 Hz à 700 Hz.

12. Procédé d'entrée de touches selon la revendication 11, dans lequel l'onde carrée de tension est construite d'une manière telle qu'au moins l'un parmi le nombre de répétitions de cycles, la fréquence et l'amplitude de l'onde carrée de tension est différent en fonction des types de parties d'entrée manipulées par l'utilisateur du terminal.
